(19) Europäisches Patentamt
European Patent Office
Office européen des brevets

(11) **EP 4 597 639 A1**

(12) **EUROPEAN PATENT APPLICATION**
published in accordance with Art. 153(4) EPC

(43) Date of publication:
**06.08.2025 Bulletin 2025/32**

(21) Application number: **23871934.8**

(22) Date of filing: **13.09.2023**

(51) International Patent Classification (IPC):
**H01M 4/66** (2006.01)     **H01M 10/052** (2010.01)

(52) Cooperative Patent Classification (CPC):
**H01M 4/66; H01M 10/052;** Y02E 60/10

(86) International application number:
**PCT/JP2023/033386**

(87) International publication number:
**WO 2024/070701 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022 JP 2022157041**

(71) Applicant: **Panasonic Intellectual Property
Management Co., Ltd.
Kadoma-shi, Osaka 571-0057 (JP)**

(72) Inventor: **UCHIYAMA Yohei
Kadoma-shi, Osaka 571-0057 (JP)**

(74) Representative: **Novagraaf International SA
Chemin de l'Echo 3
1213 Onex, Geneva (CH)**

(54) **SECONDARY BATTERY AND NEGATIVE ELECTRODE CURRENT COLLECTOR**

(57)     A secondary battery includes a positive electrode, a negative electrode, a separator disposed between the positive electrode and the negative electrode, and a nonaqueous electrolyte having lithium ion conductivity. The negative electrode includes a negative electrode current collector. The negative electrode current collector includes a resin film, and a transition metal layer laminated with the resin film. The resin film includes a base resin layer, and a surface resin layer, and at least the surface resin layer contains a nitrogen-containing resin. Accordingly, in the secondary battery, it is possible to suppress the embrittlement of the negative electrode current collector including a resin film.

FIG. 1

EP 4 597 639 A1

**Description**

[Technical Field]

The present disclosure relates to a secondary battery and a negative electrode current collector.

[Background Art]

Patent Literature 1 proposes an anode electrode structure which includes a current collector containing copper. The anode electrode structure further includes a lithium metal film formed on the current collector. The anode electrode structure further includes a solid electrolyte interface (SEI) film stack formed on the lithium metal film. In one embodiment, at least one of current collectors 110 and 160 includes a polyethylene terephthalate film coated with a metal material.

[Citation List]

[Patent Literature]

Patent Literature 1: Japanese Laid-Open Patent Publication No. 2021-502671

[Summary of Invention]

[Technical Problem]

The polyethylene terephthalate (PET) film coated with a metal material proposed in Patent Literature 1 is prone to degradation. It has been known that when a transition metal comes in contact with a polymer, metal ions migrate to the polymer and cleave the bond of the polymer through a radical reaction, causing embrittlement of the polymer. For example, when copper is in contact with the PET film, copper ions migrate to the PET film and embrittle the PET (copper damage). Therefore, when a transition metal layer is laminated on the surface of a resin film, embrittlement of the resin film gradually proceeds. Although the progress of embrittlement of the resin film is slow in many cases, it is desirable to suppress such embrittlement as much as possible.

On the other hand, when a negative electrode current collector including a resin film and a transition metal layer laminated on the surface thereof is used in a lithium-metal secondary battery (hereinafter referred to as a "lithium secondary battery"), the embrittlement of the resin film is significantly accelerated. On the negative electrode of a lithium secondary battery, lithium metal deposits during charging, and the lithium metal dissolves during discharging. This means that when the transition metal being in contact with the resin film comes in contact with lithium metal, the embrittlement of the resin film is significantly accelerated. No report on such a phenomenon has been found in any conventional literature.

[Solution to Problem]

One aspect of the present disclosure relates to a secondary battery, including a positive electrode, a negative electrode, a separator disposed between the positive electrode and the negative electrode, and a nonaqueous electrolyte having lithium ion conductivity, wherein the negative electrode includes a negative electrode current collector, the negative electrode current collector includes a resin film, and a transition metal layer laminated with the resin film, the resin film includes a base resin layer, and a surface resin layer, and at least the surface resin layer contains a nitrogen-containing resin.

Another aspect of the present disclosure relates to a negative electrode current collector, including a resin film, and a transition metal layer laminated with the resin film, wherein the resin film includes a base resin layer, and a surface resin layer, and at least the surface resin layer includes a nitrogen-containing resin.

[Advantageous Effects of Invention]

According to the present disclosure, in a secondary battery, the embrittlement of a negative electrode current collector including a resin film is remarkably suppressed.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic longitudinal sectional view of a lithium secondary battery according to one embodiment of the present disclosure.
[FIG. 2] An enlarged sectional view of a region II in FIG. 1.
[FIG. 3] An enlarged sectional view of a region III in FIG. 1.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B.

An embodiment of the present disclosure relates to a secondary battery. The secondary battery includes a positive electrode, a negative electrode, a separator disposed between the positive electrode and the negative electrode, and a nonaqueous electrolyte having lithium ion conductivity. The secondary battery is, for example, a nonaqueous electrolyte secondary battery, including a lithium-ion secondary battery in which a material that reversibly absorbs and releases lithium ions is used as a negative electrode active material, and a lithium secondary battery in which lithium metal deposits on the negative electrode during charging and the lithium metal dissolves during discharging.

In a lithium secondary battery, 70% or more, for example, of the rated capacity develops through deposition and dissolution of lithium metal. The migration of electrons at the negative electrode during charging and during discharging is mainly due to the deposition and the dissolution of lithium metal on the negative electrode. Specifically, 70 to 100% (e.g., 80 to 100%, 90 to 100%) of the migration of electrons (in another aspect, electric current) at the negative electrode during charging and during discharging is due to the deposition and the dissolution of lithium metal. That is, the negative electrode of the lithium secondary battery differs from the negative electrode in which the migration of electrons at the negative electrode during charging and during discharging is mainly due to absorption and release of lithium ions by the negative electrode active material (graphite etc.).

In a battery in which lithium metal deposits on the negative electrode during charging, the open circuit potential (OCV: open circuit voltage) of the negative electrode at full charge is, for example, 70 mV or less, relative to lithium metal (dissolution/deposition potential of lithium). Being at full charge refers to a state where the battery is charged until a state of charge (SOC) of, for example, $0.98 \times C$ or more is reached, where C represents the rated capacity of the battery. The open circuit potential (OCV) of the negative electrode at full charge can be measured by disassembling the battery in a fully charged state under an argon atmosphere to take out the negative electrode, and assembling it into a cell for measurement, with lithium metal used as a counter electrode. The nonaqueous electrolyte of the cell may be of the same composition as the electrolyte in the disassembled battery.

In the following, each constituent element of the secondary battery will be sequentially described.

[Negative electrode]

The negative electrode includes a negative electrode current collector. The negative electrode current collector includes a resin film, and a transition metal layer laminated with the resin film. The resin film includes a base resin layer, and a surface resin layer. The transition metal layer is a layer being in contact with the resin film or the surface resin layer.

The resin film is lightweight, with which the energy density of the lithium secondary battery can be easily increased. Furthermore, the resin film is hardly torn during roll-conveying and is easy to handle. The resin film, unlike a common negative electrode current collector such as copper foil, will not be embrittled even when the negative electrode potential is low. The resin film is highly resistant to the stress caused when the electrode expands and contracts, and is excellent as a material of the current collector in that it is hardly broken. In particular, in a lithium secondary battery, the degree of expansion of the negative electrode during charging tend to be high, because lithium metal deposits on the negative electrode. The "expansion of the negative electrode" means that the sum of the volumes of the negative electrode and the deposited lithium metal increases. Especially when lithium metal deposits in a dendritic form, the amount of expansion further increases. As a result, stress is easily generated in the negative electrode.

A principal surface of the resin film may be smooth or roughened, and may be subjected to plasma treatment, corona treatment, and the like. When the principal surface of the resin film is smooth, a maximum height roughness Rz of the principal surface is 2.5 $\mu$m or less. When the principal surface of the resin film is roughened, the maximum height roughness Rz of the principal surface is more than 2.5 $\mu$m, and may be 8 $\mu$m or more. The maximum height roughness Rz is measured in accordance with JIS B 0601:2013. The principal surface of the resin film is a surface other than the end surfaces of the resin film, and is each of two surfaces having the widest area. In the present specification, the "surface" usually means the "principal surface".

In view of increasing the energy density of the secondary battery, the thickness of the resin film is desirably as thin as possible, as long as the mechanical strength is ensured. An example of a preferred range of the thickness of the resin film is 1.5 $\mu$m to 30 $\mu$m or less. The thickness of the resin film may be determined by measuring the thicknesses at any 10 points on a cross section of the resin film, using a scanning electron microscope (SEM), and calculating the average value of them.

In the resin film, at least the surface resin layer contains a nitrogen-containing resin. Of the surface resin layer, 90 mass% or more may be a nitrogen-containing resin. The nitrogen-containing resin may be a polymer having nitrogen atom on the main chain or the side chain. The content of nitrogen atom in the nitrogen-containing resin may be 3 mass% or more. Accordingly, the content of nitrogen atom in the surface resin layer may be 2.5 mass% or more.

In the resin film, the surface resin layer may contain at least a nitrogen-hydrogen bond (N-H bond). The presence or absence of the nitrogen-hydrogen bond can be identified by infrared absorption spectrometry. The infrared absorption peak specific to the nitrogen-hydrogen bond is present at or around 1655 cm$^{-1}$ (1640 to 1670 cm$^{-1}$), 1530 cm$^{-1}$ (1515 to 1545 cm$^{-1}$), etc.

A sample of the surface resin layer or the resin film may be prepared by scraping off or wet-removing the active material from the negative electrode current collector, and then, dissolving the transition metal layer in a diluted mixture solution of 1:1 (by mass) distilled water and 65% nitric acid. In this case, the surface resin layer at the outermost surface may be analyzed by infrared absorption spectrometry. An example of the analysis conditions is shown below.

FT-IR (ATR method)
Measuring apparatus: Varian 670 FTIR (available from Varian, Inc.)
Measuring mode: attenuated total reflection
Light source: special ceramics
Detector: DLaTGS (deuterated L-alanine doped triglycine sulfate)
Resolution: 4 cm$^{-1}$
Number of integrations: 256
IRE: Ge
Angle of incidence: 60 degrees
Attachment: single reflection ATR attachment (Seagull)

The nitrogen-hydrogen bond can also be analyzed by X-ray photoelectron spectroscopy (XPS) chemical shift.

The nitrogen-containing resin may be a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group. Such a polymer can be, for example, a polyurethane resin, a polyurea resin, a melamine resin, a polyamide resin, an aramid resin, a polyimide resin, and the like. In particular, a polyurethane resin is excellent as a material of the current collector in that it has high flexibility and high resistance to the stress caused when the electrode expands and contracts, and is hardly broken.

A polyurethane resin is synthesized by reacting a polyol with a polyisocyanate (esp., diisocyanate) having two or more functional groups. Polyurethane resins with various physical properties can be synthesized by selecting a polyol and a polyisocyanate as desired.

The nitrogen-containing resin can contain at least one selected from the group consisting of an aliphatic isocyanate group, an aromatic isocyanate group, an allophanate group, and a biuret group. Especially, a thermosetting polyurethane resin, which is synthesized using a polyisocyanate as a raw material, has with high probability an unreacted isocyanate group remaining therein. The isocyanate group is presumed as being reduced on the negative electrode to generate a surface-film component for forming a stable surface film on the negative electrode. In addition, it has been gradually revealed that the thermosetting resin forms a robust surface film with three-dimensional structure, and is highly effective in suppressing the copper damage. The same applies to an ultraviolet-curing type. Note that the presence of the isocyanate group can be confirmed because it has an infrared absorption peak due to asymmetric stretching vibration at or around 2250 cm$^{-1}$ (2270 to 2240 cm$^{-1}$).

The surface resin layer can contain a filler. It is desirable to increase the adhesion between the resin base and the transition metal layer or the lithium metal layer. By adding a filler, such as silica or alumina, to the surface resin layer, irregularities are formed on the surface resin layer, to increase the surface area, so that the improvement in adhesion by the anchor effect can be expected. The filler is not particularly limited, as long as it can roughen the surface of the surface resin layer and will not cause a side reaction with the nonaqueous electrolyte in the battery to deteriorate the battery characteristics. The filler may be particles of resin, metal oxide, ceramic, metal, etc.

The surface resin layer may be formed as a coating layer by applying a nitrogen-containing resin onto a surface of the base resin layer. In this case, the nitrogen-containing resin may be a thermosetting resin or a UV-curable resin. The nitrogen-containing resin may be diluted with a solvent and applied onto the surface of the base resin layer. The cured product of the thermosetting resin may have a three-dimensional network of molecular chains.

The thickness of the surface resin layer is, for example, 5 $\mu$m or less, and an example of a preferred thickness range is 0.05 $\mu$m to 1.5 $\mu$m. The thickness of the surface resin layer may be determined by measuring the thicknesses at any 10 points of the surface resin layer on a cross section of the negative electrode, the negative electrode current collector, or the resin film, using a scanning electron microscope (SEM), and calculating the average value of them.

Most resin films are not electrically conductive. The transition metal layer serves to impart favorable conductivity to the negative electrode current collector. The transition metal layer may be any layer that contains a transition metal and has electron conductivity. The transition metal layer preferably contains a transition metal in a metallic state having electron conductivity by free electrons.

When the negative electrode current collector is used in a lithium-ion secondary battery and a lithium secondary battery, the transition metal layer preferably contains copper, nickel, chromium, titanium, iron, silver, gold, tin, and the like, for ensuring the corrosion resistance and the conductivity. The transition metal layer desirably contains at least one selected from copper, copper alloy, stainless steel, nickel, nickel alloy, and the like, and particularly desirably, contains copper or copper alloy, which are excellent in conductivity.

The transition metal acts to embrittle the resin film. Especially when the transition metal layer contains copper, embrittlement of the resin film tends to occur. As a new finding not yet reported, it has been found that lithium metal significantly accelerates the embrittlement of the resin film due to a transition metal (e.g., copper damage). That is, in a lithium secondary battery in which lithium metal deposits on the negative electrode, the deterioration of the resin film due to the transition metal layer can be severe. **In** this regard, by including a nitrogen-containing resin in at least the surface resin layer of the resin film, the embrittlement of the resin film is remarkably suppressed.

Note that a nickel-chromium alloy layer can be used as a metal layer that blocks the migration of copper ions to the resin film. However, in lithium secondary batteries, the blocking effect by the nickel-chromium alloy layer cannot be obtained at all. This is presumably because when metal lithium, which is easily ionized, is in contact with a transition metal such as copper, the ionization of the transition metal is accelerated, and the rupture of the polymer bond due to the transition metal ions is accelerated. On the other hand, according to the surface resin layer containing a nitrogen-containing resin, it is possible to obtain a noticeable effect of suppressing the rupture of the polymer.

The factor that most influences the embrittlement of the resin film is the rupture of the carbon atom-to-carbon atom bond. When the resin film contains a nitrogen-containing resin, the nitrogen-containing resin includes a carbon atom-to-nitrogen atom bond. The carbon atom-to-nitrogen atom bond is considered to be less susceptible to the influence of a transition metal or its ions. There is a possibility that the transition metal has been stabilized by nitrogen atoms, resulting in suppressed rupture of the carbon atom-to-carbon atom bond.

The transition metal layer may be formed by deposition on the surface of the surface resin layer using a liquid phase method or a gas phase method. Examples of the liquid phase method include an electrolytic deposition method, such as electrolytic plating and electroless plating. Examples of the gas phase method include vapor deposition, sputtering, and atomic layer deposition (ALD). Sputtering may be used to form a base, on which a transition metal layer may be formed thickly by wet electrolytic plating. In short, a plurality of methods may be applied in combination. The transition metal layer may be formed by a lamination method. The method of forming a transition metal layer, however, is not particularly limited.

The thickness of the transition metal layer is, for example, 5 $\mu$m or less, and may be 3 $\mu$m or less. An example of a preferred range of the thickness of the transition metal layer is 0.05 $\mu$m to 1.5 $\mu$m, and may be 0.1 $\mu$m to 1.5 $\mu$m. The thickness of the transition metal layer may be obtained by measuring the thicknesses at any 10 points of the transition metal layer on a cross section of the negative electrode or the negative electrode current collector, using a scanning electron microscope (SEM), and calculating the average value of them. The transition metal layer may have a plurality of layers made of different metals.

The base resin layer is an essential part of the negative electrode current collector, and is usually thicker than the surface resin layer and thicker than the transition metal layer. Of the base resin layer, 51 mass% or more is constituted of a resin or an organic material. For improving the adhesion with the transition metal layer and the lithium layer, the base resin layer may contain an inorganic material, such as inorganic particles. The base resin layer may be a stretched film, a non-porous film (a film without pores), or a film having a plurality of orderly arranged pores. The base resin layer may have insulating properties, may have conductive properties, and may be non-conductive. The form and the physical properties of the base resin layer are not particularly limited.

The base resin layer is formed by, for example, molding a general-purpose plastic, a general-purpose engineering plastic, or the like, serving as a raw material, into a sheet form. Examples of the raw material include polyester resin, olefin resin, polyphenylene sulfide resin, acrylic resin, polycarbonate resin, polyether ether ketone resin, polysulfone resin, polyphenylsulfone resin, polyethersulfone resin, polyamide resin, polyimide resin, polyetherimide resin, polybenzimidazole resin, liquid crystal polymer resin, polyacetal resin, polyvinyl chloride resin, polyarylate resin, silicone resin, nylon resin, polyvinylidene chloride resin, ethylene-vinyl alcohol copolymer, polyvinyl alcohol resin, polystyrene resin, epoxy resin, urethane resin, phenol resin, melamine resin, urea resin, and unsaturated polyester resin. The resin contained in the base resin layer may be used singly or in combination of two or more kinds.

The resin contained in the base resin layer is preferably a resin having an aromatic ring, a resin containing no fluorine atom, or an olefin resin. When the resin has an aromatic ring (e.g., benzene ring) in its molecule, the affinity between the base resin layer and the lithium metal layer is increased, and the adhesive strength between the two is improved.

As the polyester resin, an aromatic polyester is preferred, and non-oriented polyethylene terephthalate, biaxially oriented polyethylene terephthalate, polybutylene terephthalate, polyethylene naphthalate, and the like are preferred. As the acrylic resin, polymethyl methacrylate, and the like are exemplified. As the polyimide resin, an aromatic polyimide is preferred. As the polyamide resin, an aromatic polyamide (aramid resin) is preferred. As the olefin resin, non-oriented polypropylene, biaxially oriented polypropylene, low-density polyethylene, medium-density polyethylene, high-density polyethylene, linear low-density polyethylene, metallocene polyethylene, an ethylene-vinyl acetate copolymer, an ethylene-methyl acrylate copolymer, an ethylene-ethyl acrylate copolymer, an ethylene-methyl methacrylate copolymer, an ethylene-acrylic acid copolymer, an ethylene-methacrylic acid copolymer, an ionomer, and the like are preferred.

The extrusion method of a base resin layer may be a T-die method or an inflation method, and may be non-oriented, uniaxially oriented, sequentially biaxially oriented, or simultaneously biaxially oriented. The combination of monomers, which is the bonding mode of the resin, may be a homopolymer, and may be a copolymer, or a terpolymer. The arrangement of monomers is not limited, and may be a random copolymer or a block copolymer. Two or more kinds of base resin layers may be combined. For example, two or more base resin layers may be laminated together. A resin with crystallinity may be in a crystalline state, may be in an amorphous state produced by, for example quenching, or in a mixed state of the two. Also, a polymer alloy containing two or more kinds of the above-mentioned resins may be used.

To ensure adhesion with another layer, such as a vapor deposition film, a corona treatment or a plasma treatment may be applied to the surface of the base resin layer. The base resin layer may be provided with irregularities to improve adhesion with the surface resin layer. In that case, a filler, such as ceramic, resin, or metal, may be added to the base resin layer, to form irregularities on the surface the base resin layer.

The tensile strength of the base resin layer is, for example, 100 MPa or more, may be 200 MPa or more, may be 250 MPa or more, and may be 300 MPa or more. The upper limit of the tensile strength of the base resin layer is not particularly limited, but may be, for example, 500 MPa or less, in view of ensuring sufficient flexibility to relax the stress.

The tensile strength of the base resin layer is determined from the following equation, using the maximum load measured when a test piece of the base resin layer is pulled at a constant speed in a direction perpendicular to its cross section. That is, the tensile strength is a nominal stress obtained by dividing the maximum load by the initial cross-sectional area. The tensile strength is measured by a method in accordance with JIS C 2151. The test piece is prepared from the base resin layer by punching it into a predetermined shape. The shape of the test piece is set the same as that of the test piece type 2 of JIS C 2151. The thickness of the test piece is set the same as the thickness of the base resin layer.

$$\rho = P_{max}/A_0$$

$\rho$: tensile strength (MPa)
$P_{max}$: maximum load (N)
$A_0$: initial cross-sectional area (mm$^2$)

The breaking elongation of the base resin layer is, for example, 50% or more, may be 80% or more, may be 100% or more, and may be 200% or more. The upper limit of the breaking elongation of the base resin layer is not particularly limited, but may be, for example, 400% or less, in view of ensuring sufficient mechanical strength.

The breaking elongation of the base resin layer is determined from the following equation, using the initial length and the length at break when a test piece of the base resin layer is pulled at a constant speed in a direction perpendicular to its cross section. The breaking elongation is measured by a method in accordance with JIS K 7127. The shape of the test piece is set the same as that of the test piece type 2 of JIS K 7127. The thickness of the test piece is set the same as the thickness of the base resin layer.

Breaking elongation $\delta$ (%) = 100 $\times$ (length at break L - initial length $L_0$) / initial length $L_0$

$\delta$: breaking elongation (%)
L: length at break

$L_0$: initial length

The thickness of the base resin layer is, for example, 20 $\mu$m or less, and may be 6 $\mu$m to 12 $\mu$m. The thickness of the base resin layer may be determined by measuring the thicknesses at any 10 points of the base resin layer on a cross section of the negative electrode, the negative electrode current collector, or the resin film, using a scanning electron microscope (SEM), and calculating an average value of them.

The negative electrode may further include a lithium metal layer laminated on the surface of the transition metal layer. In this case, the lithium metal layer is in contact with the transition metal layer. The lithium metal layer usually accelerates the embrittlement of the resin film due to the transition metal. On the other hand, when the resin film includes a surface resin layer containing a nitrogen-containing resin, such embrittlement is remarkably suppressed. In other words, the negative electrode current collector according to the present disclosure is particularly suitable for use in a lithium secondary battery in which lithium metal deposits on the negative electrode during charging, and the lithium metal dissolves during discharging.

However, even when the negative electrode is a negative electrode active material other than lithium metal, for example, a carbon material such as graphite or a silicon-containing material, in consideration of long-term reliability, using the negative electrode current collector according to the present disclosure is desirable in some cases.

The lithium metal layer can have a current collecting function. During charging, lithium ions contained in the nonaqueous electrolyte receive electrons on the lithium metal layer to be lithium metal, which deposits on the surface of the lithium metal layer. The lithium metal deposited on the surface of the lithium metal layer dissolves during discharging, in the form of lithium ions, into the nonaqueous electrolyte.

The lithium metal layer is a layer formed of at least one of lithium metal and a lithium alloy. The lithium alloy preferably contains magnesium. The magnesium content in the lithium alloy is, for example, 0.1 mass% or more, preferably 0.5 mass% or more or 1 mass% or more, and may be 3 mass% or more or 5 mass% or more. When the magnesium content in the lithium alloy is within such a range, the effect of suppressing the dendritic deposition of lithium metal can be obtained. In addition, an SEI film having excellent film physical properties is likely to be formed on the surface of the lithium metal layer. The magnesium content in the lithium alloy is, for example, 30 mass% or less, and may be 15 mass% or less or 10 mass% or less. When the magnesium content in the lithium alloy is within such a range, magnesium is likely to be dissolved in lithium to form a solid solution, so that a stable lithium alloy is likely to be formed.

The lithium alloy may contain a third element other than lithium (first element) and magnesium (second element). Examples of the third element include aluminum, indium, calcium, lead, hydrogen, sodium, bismuth, copper, gold, silver, and zinc. The lithium alloy may contain one third element, or two or more third elements. The third element content in the lithium alloy is, for example, 10 mass% or less, and may be 1 mass% or less, or less than 0.1 mass%.

The lithium metal layer may be formed by a lamination method in which a lithium metal foil is attached to the surface of the transition metal layer. The lithium metal layer may be formed by deposition on the surface of the transition metal layer using a liquid phase method or a gas phase method. An example of the liquid phase method is electrodeposition. Examples of the gas phase method includes vapor deposition, and sputtering. The method of forming a lithium metal layer, however, is not particularly limited.

The thickness of the lithium metal layer may be, for example, 1 $\mu$m or more or 5 $\mu$m or more, in a discharged state with a depth of discharge (DOD) of 90% or more. On the other hand, in view of increasing the energy density of the secondary battery, the thickness of the lithium metal layer may be 30 $\mu$m or less or 25 $\mu$m or less, in a discharged state with a depth of discharge of 90% or more. An example of a preferred range of the thickness of the lithium metal layer is 5 $\mu$m to 20 $\mu$m. Note that a discharged state with a depth of discharge (DOD) of 90% or more is equivalent to a state of charge (SOC) of $0.1 \times C$ or less, where C is the rated capacity of the battery. The thickness of the lithium metal layer may be obtained by measuring the thicknesses at any 10 points of the lithium metal layer on a cross section of the negative electrode using a scanning electron microscope (SEM), and calculating an average value of them.

The surface resin layer and the transition metal layer may be formed on only one side of the base resin layer, or on both sides thereof. Likewise, the lithium metal layer may be formed on only one side of the base resin layer, or on both sides thereof.

When the surface resin layer and the transition metal layer are laminated on each of both sides of the base resin layer, the total thickness of the base resin layer, the surface resin layers, and the transition metal layers may be, for example, 10 $\mu$m to 80 $\mu$m. Such a negative electrode current collector is suitable for forming a wound electrode group including a positive electrode and a negative electrode wound together, with a separator interposed therebetween. In the wound electrode group, stress is likely to occur during charging and discharging, and especially in the commonly used negative electrode current collector made of copper foil, breakage tends to occur due to embrittlement. In addition, on the outer periphery side of the wound electrode group, a large tension may be applied to the negative electrode. On the other hand, with the negative electrode current collector according to the present disclosure, since the negative electrode current collector includes a resin film, the breakage of the negative electrode is remarkably suppressed even when a large tension is applied to the negative electrode on the outer periphery side of the wound electrode group.

The surface resin layer is desirably provided on the entire surface of each of the principal surfaces of the base resin layer, but there may be a portion not covered with the surface resin layer as long as it is 10% or less of the area of the principal surface of the base resin layer. The principal surface of the base resin layer is a surface other than the end surfaces of the base resin layer, and is each of two surfaces having the widest area.

The transition metal layer is desirably provided on the entire surface of the principal surface of each of the surface resin layers, but there may be a portion not covered with the transition metal layer as long as it is 30% or less of the area of the principal surface of the surface resin layer. Note that, when a portion of the principal surface of the base resin layer is not covered with the surface resin layer, it is desirable that the portion is not in contact with the transition metal layer.

In the case of forming a lithium metal layer, the lithium metal layer is desirably provided on the entire surface of the principal surface of each of the transition metal layers, and there may be a portion not covered with the lithium metal layer as long as it is 30% or less of the area of the principal surface of the transition metal layer.

A negative electrode current collector according to one preferred embodiment has a base resin layer, surface resin layers formed on both sides of the base resin layer, and transition metal layers formed on the surfaces of the surface resin layers on both sides (i.e., both sides of the resin film).

A negative electrode according to one preferred embodiment has a base resin layer, surface resin layers formed on both sides of the base resin layer, transition metal layers formed on the surfaces of the surface resin layers on both sides (i.e., both sides of the resin film), and lithium metal layers formed on the surfaces of the transition metal layers on both sides (i.e., both sides of the negative electrode current collector). The base resin layer, the surface resin layers, and the transition metal layers constitute a negative electrode current collector. The lithium metal layers can function as both a negative electrode current collector and a negative electrode active material layer. Here, the lithium metal layers are a constituent element of the negative electrode and are distinguished from the negative electrode current collector.

The negative electrode according to one preferred embodiment is suitable for a lithium secondary battery in which lithium metal deposits on the negative electrode during charging and the lithium metal dissolve during discharging. The lithium contained in the lithium metal layers may or may not dissolve during discharging. In other words, the lithium that deposits on the negative electrode during charging and dissolves from the negative electrode during discharging may be derived from the positive electrode, or may be derived from the positive electrode and the lithium metal layers.

[Positive electrode]

The positive electrode includes, for example, a positive electrode current collector, and a positive electrode mixture layer supported on the positive electrode current collector. The positive electrode mixture layer can be formed by applying a positive electrode slurry of a positive electrode mixture dispersed in a dispersion medium, onto a surface of the positive electrode current collector, followed by drying. The applied film after drying may be rolled as necessary. The positive electrode mixture contains a positive electrode active material as an essential component, and may contain, as optional components, a binder, a conductive agent, and the like. The positive electrode mixture layer may be formed on only one side of the positive electrode current collector, or on both sides thereof.

The positive electrode active material is a material that absorbs and releases lithium ions to develop capacity. As the positive electrode active material, for example, a lithium-containing transition metal oxide, a transition metal fluoride, a polyanion, a fluorinated polyanion, a transition metal sulfide, and the like can be used. In particular, a lithium-containing transition metal oxide is preferred in terms of its low manufacturing costs and high average discharge voltage.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one or more transition metal elements. The transition metal element may be Co, Ni, and/or Mn. The lithium-containing transition metal oxide may contain one or more typical elements as necessary. Examples of the typical elements include Mg, Al, Ca, Zn, Ga, Ge, Sn, Sb, Pb, and Bi. The typical element may be Al, or the like.

The conductive material is, for example, a carbon material. Examples of the carbon material include carbon black, acetylene black, Ketjen black, carbon nanotubes, and graphite.

As the binder, for example, a fluorocarbon resin, polyacrylonitrile, a polyimide resin, an acrylic resin, a polyolefin resin, a rubbery polymer, and the like can be used. Examples of the fluorocarbon resin include polytetrafluoroethylene and polyvinylidene fluoride.

The positive electrode current collector may be a foil, a film, or the like. The surface of the positive electrode current collector may be applied with a carbon material. As the material of the positive electrode current collector, for example, a metal material containing Al, Ti, or Fe can be used. The metal material may be Al, an Al alloy, Ti, a Ti alloy, or an Fe alloy. The Fe alloy may be stainless steel (SUS). A material formed by applying a metal material onto a surface of a resin film by physical vapor deposition (PVD) or other methods may be used. The thickness of the positive electrode current collector is not particularly limited, and may be, for example, 5 $\mu$m or more and 30 $\mu$m or less.

[Separator]

Usually, it is desirable to interpose a separator between the positive electrode and the negative electrode. The separator has excellent ion permeability and has moderate mechanical strength and electrically insulating properties. As the separator, for example, a microporous thin film, a woven fabric, a nonwoven fabric, and the like can be used. The material of the separator is preferably a polyolefin such as polypropylene and polyethylene, polymethylpentene, polyethylene terephthalate, polybutylene terephthalate, aramid, cellulose, and the like.

In order to improve the heat resistance of the separator, a heat-resistant coating layer containing ceramic particles may be provided on the surface (on one side or both sides) of the separator.

As the separator, a single sheet may be interposed between the positive electrode and the negative electrode, and a plurality of sheets may be interposed therebetween. When a plurality of sheets of separators are interposed between the positive electrode and the negative electrode, a plurality of sheets of one selected from microporous thin film, woven fabric, and nonwoven fabric may be stacked and used, or a plurality of sheets of at least two selected from microporous thin film, woven fabric, and nonwoven fabric may be stacked and used. The thickness of the separator when a single sheet is interposed is not particularly limited, but is preferably 5 to 80 $\mu$m. The thickness of the separator when a plurality of sheets are interposed is also not particularly limited, but is preferably 5 to 80 $\mu$m.

[Nonaqueous electrolyte]

The nonaqueous electrolyte having lithium ion conductivity may be a solid electrolyte, and may be a liquid electrolyte (electrolyte solution). The nonaqueous electrolyte may be a gel electrolyte (polymer electrolyte) containing a matrix polymer that absorbs a nonaqueous solvent and turns into a gel.

The polymer electrolyte contains, for example, a lithium salt and a matrix polymer, or a nonaqueous solvent, a lithium salt, and a matrix polymer. Examples of the matrix polymer that can be use include fluorocarbon resin, acrylic resin, and polyether resin.

The solid electrolyte may be, for example, an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte) is used.

The electrolyte solution contains, for example, a nonaqueous solvent, and a lithium salt that dissolves in the nonaqueous solvent. When the lithium salt dissolves into the nonaqueous solvent, lithium ions and anions are produced.

As the anions, any known anions for use in nonaqueous electrolyte can be used. Specific examples thereof include $BF_4^-$, $ClO_4^-$, $PF_6^-$, $CF_3SO_3^-$, $CF_3CO_2^-$, imide anions, and an oxalate complex anion. Examples of the imide anions include $N(SO_2F)_2^-$, and $N(SO_2CF_3)_2^-$. The oxalate complex anion may contain boron and/or phosphorus. Examples of the oxalate complex anion include bisoxalateborate anion, $BF_2(C_2O_4)^-$, $PF_4(C_2O_4)^-$, and $PF_2(C_2O_4)_2^-$. The nonaqueous electrolyte may contain these lithium salts singly, or in combination of two or more kinds.

In the lithium secondary battery, in view of suppressing the dendritic deposition of lithium metal, the nonaqueous electrolyte preferably contains at least an oxalate complex anion. By the interaction between the oxalate complex anion and lithium, lithium metal is likely to deposit uniformly in the form of fine particles. Therefore, local deposition of lithium metal can be easily suppressed. The nonaqueous electrolyte may include an oxalate complex anion and another anion. The other anion may be $PF_6^-$ and/or imide anions.

As the nonaqueous solvent, an ester compound, an ether compound, a nitrile compound, an amide compound, and the like can be used. These compounds include a halogen-substituted derivative. The halogen-substituted derivative is exemplified by a fluoride. The nonaqueous electrolyte may contain these nonaqueous solvents singly, or in combination of two or more kinds.

The nonaqueous solvent of the lithium secondary battery may contain an ether compound as a major component. The major component means the content ratio of the ether compound in the nonaqueous solvent being 50 mass% or more, which may be 80 mass% or more. The content ratio of the ether compound in the nonaqueous solvent may be 95 mass% or less, and may be 100 mass% or less. With regard to the range of the content ratio of the ether compound in the nonaqueous solvent, the above upper and lower limits can be combined in any combination.

The ether compound is excellent in stability (esp. in reduction resistance), and is considered to suppress the generation of decomposed products on the negative electrode surface, and thus, suppress the expansion of the negative electrode.

As the ether compound, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, diethylene glycol dimethyl ether, 1,1,2,2-tetrafluoroethyl-2,2,2-trifluoroethyl ether, and 1,1,2,2-tetrafluoroethyl-2,2,3,3-tetrafluoropropyl ether. In particular, preferred are 1,2-dimethoxyethane, 1,1,2,2-tetrafluoroethyl-2,2,2-trifluoroethyl ether, and the like. These may be used singly or in combination of two or more kinds.

As the ester compound, for example, a carbonic acid ester, a carboxylic acid ester, and the like are exemplified. Examples of a cyclic carbonic acid ester include ethylene carbonate, and propylene carbonate. Examples of a chain carbonic acid ester include dimethyl carbonate (DMC), ethyl methyl carbonate (EMC), and diethyl carbonate. Examples of a cyclic carboxylic acid ester include γ-butyrolactone, and γ-valerolactone. Examples of a chain carboxylic acid ester include ethyl acetate, methyl propionate, and methyl fluoropropionate. These may be used singly or in combination of two or more kinds.

The concentration of the lithium salt in the nonaqueous electrolyte is, for example, 0.5 mol/L or more and 3.5 mol/L or less. The concentration of the anions in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a surface film on the negative electrode. With the surface film derived from the additive formed on the negative electrode, the dendrite formation and growth can be easily suppressed. Examples of such an additive include vinylene carbonate, fluoroethylene carbonate (FEC), and vinyl ethyl carbonate (VEC).

[Lithium secondary battery]

In the following, the configuration of a lithium secondary battery according to the present disclosure will be described with reference to the drawings, with a cylindrical battery including a wound electrode group taken as an example. The present disclosure, however, is not limited to the following configuration.

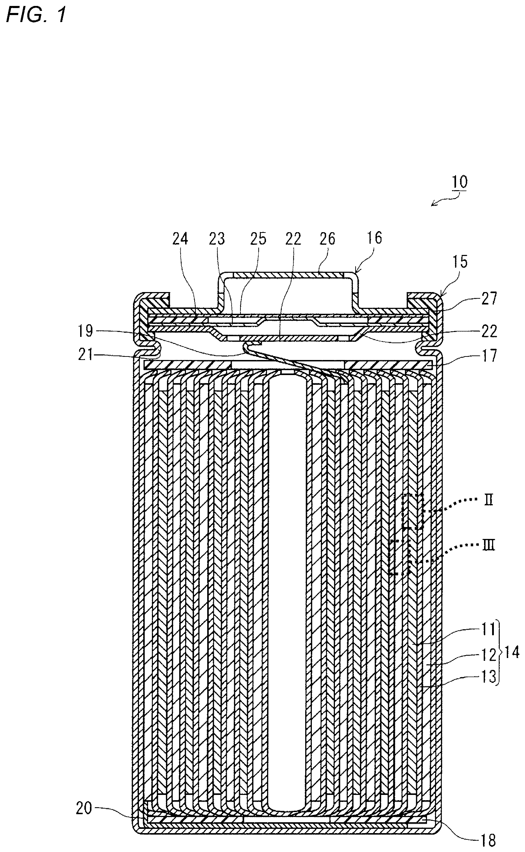

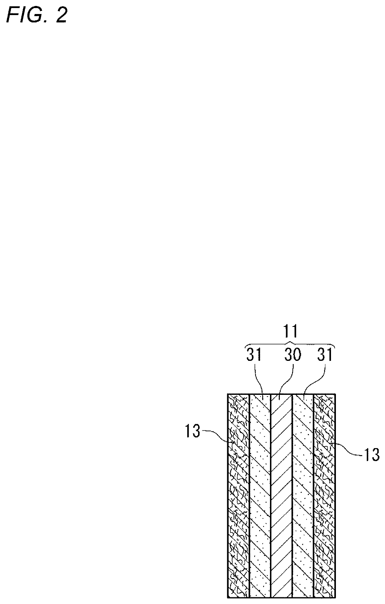

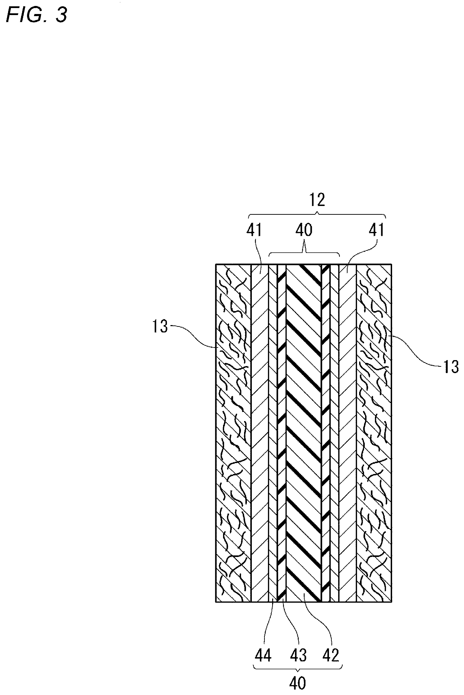

FIG. 1 is a schematic longitudinal sectional view of a lithium secondary battery according to an embodiment of the present disclosure. FIG. 2 is an enlarged view of a portion encircled by a region II (a portion including a positive electrode) in FIG. 1. FIG. 3 is an enlarged view of a portion encircled by a region III (a portion including a negative electrode) in FIG. 1. Note that each figure is a schematic illustration, and the ratio of the dimensions (e.g., thickness), etc. of the components may differ from the actual ones.

A lithium secondary battery 10 includes a cylindrical battery case, a wound electrode group 14 housed in the battery case, and a nonaqueous electrolyte (not shown). The electrode group 14 is constituted by winding a belt-shaped positive electrode 11 and a belt-shaped negative electrode 12, with a separator 13 interposed between the positive electrode 11 and the negative electrode 12.

The negative electrode 12 of the illustrated example is in a discharged state with a depth of discharge (DOD) of 100%, and is constituted of a negative electrode current collector 40 and lithium metal layers 41. The negative electrode current collector 40 is constituted of a base resin layer 42, surface resin layers 43 formed on both surfaces of the base resin layer 42, and transition metal layers 44 formed on the surfaces of the both surface resin layers 43. Without limited to the illustrated example, the negative electrode 12 may be in a discharged state with a depth of discharge (DOD) of 100%, and may be constituted only of a negative electrode current collector.

The negative electrode 12 is electrically connected via a negative electrode lead 20 to a case body 15 that serves as a negative electrode terminal. One end of the negative electrode lead 20 is connected to the negative electrode 12, for example, at its end in the longitudinal direction, and the other end is welded to the case body 15 on its inner bottom surface.

The positive electrode 11 includes a positive electrode current collector 30 and positive electrode mixture layers 31, and is electrically connected via a positive electrode lead 19 to a cap 26 that serves as a positive electrode terminal. One end of the positive electrode lead 19 is, for example, connected to the positive electrode 11 near its center in the longitudinal direction. The positive electrode lead 19 extending from the positive electrode 11 passes through a through-hole (not shown) formed in an insulating plate 17 and extends to a filter 22. The other end of the positive electrode lead 19 is welded to the filter 22 on its surface facing the electrode group 14.

The battery case includes the case body 15 which is a bottomed cylindrical metal container, and a sealing body 16 that seals the opening of the case body 15. A gasket 27 is placed between the case body 15 and the sealing body 16, and this ensures the sealing performance of the battery case. Within the case body 15, insulating plates 17 and 18 are placed at both ends of the electrode group 14 in the winding axis direction, respectively.

The case body 15 has, for example, a step portion 21 formed by pressing the side wall of the case body 15 partially from outside. The step portion 21 may be formed annularly on the side wall of the case body 15 along the circumferential direction of the case body 15. The sealing body 16 is supported on the step portion 21 on the side facing the opening.

The sealing body 16 includes the filter 22, a lower valve body 23, an insulating member 24, an upper valve body 25, and the cap 26. In the sealing body 16, these members are stacked in this order. The sealing body 16 is fitted at the opening of the case body 15, with the cap 26 positioned outside the case body 15 and the filter 22 positioned inside the case body 15. Each of the aforementioned members constituting the sealing body 16 has, for example, a disc shape or a ring shape. The lower valve body 23 and the upper valve body 25 are connected to each other at their respective central portions, and the insulating member 24 is interposed between their respective peripheral portions. The filter 22 and the lower valve body 23 are connected to each other at their respective peripheral portions. The upper valve body 25 and the cap 26 are connected to each other at their respective peripheral portions. That is, the members except the insulating member 24 are electrically connected to each other.

The lower valve body 23 is provided with a vent hole (not shown). Therefore, when the internal pressure of the battery case rises due to abnormal heat generation or other events, the upper valve body 25 bulges toward the cap 26 and spaced away from the lower valve body 23. This breaks the electrical connection between the lower valve body 23 and the upper valve body 25. When the internal pressure further rises, the upper valve body 25 ruptures, to let the gas escape though an aperture (not shown) formed in the cap 26.

Although the illustrated example is of a cylindrical lithium secondary battery, the present embodiment can be applied without limited thereto. The shape of the lithium secondary battery may be selected according to its use etc. from a cylindrical shape and other various shapes, such as coin, prismatic, sheet, and flat shapes. Although the illustrated example includes a wound electrode group, the electrode group also may be in any form, and may be a stacked electrode group constituted by stacking a positive electrode and a negative electrode, with a separator interposed therebetween. For other configurations except the electrode group and the nonaqueous electrolyte of the secondary battery, any known ones can be used without particular limitation.

<<Supplementary notes>>

The above description of embodiments discloses the following techniques.

(Technique 1)

A secondary battery, comprising

a positive electrode,
a negative electrode,
a separator disposed between the positive electrode and the negative electrode, and
a nonaqueous electrolyte having lithium ion conductivity, wherein
the negative electrode includes a negative electrode current collector,
the negative electrode current collector includes a resin film, and a transition metal layer laminated with the resin film,
the resin film includes a base resin layer, and a surface resin layer, and
at least the surface resin layer contains a nitrogen-containing resin.

(Technique 2)

The secondary battery according to technique 1, wherein, on the negative electrode, lithium metal deposits during charging, and the lithium metal dissolves during discharging.

(Technique 3)

The secondary battery according to technique 1 or 2, wherein the nitrogen-containing resin includes a nitrogen-hydrogen bond.

(Technique 4)

The secondary battery according to any one of techniques 1 to 3, wherein the nitrogen-containing resin is a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group.

(Technique 5)

The secondary battery according to any one of techniques 1 to 4, wherein the nitrogen-containing resin is a polymer having at least one selected from the group consisting of an aliphatic isocyanate group, an aromatic isocyanate group, an allophanate group, and a biuret group.

(Technique 6)

The secondary battery according to any one of techniques 1 to 5, wherein the surface resin layer contains a filler.

(Technique 7)

The secondary battery according to any one of techniques 1 to 6, wherein a thickness of the surface resin layer is 5 $\mu$m or less.

(Technique 8)

The secondary battery according to any one of techniques 1 to 7, wherein a thickness of the base resin layer is 20 $\mu$m or less.

(Technique 9)

The secondary battery according to any one of techniques 1 to 8, wherein a thickness of the transition metal layer is 3 $\mu$m or less.

(Technique 10)

The secondary battery according to any one of techniques 1 to 9, wherein a lithium metal layer is laminated on a surface of the transition metal layer.

(Technique 11)

A negative electrode current collector, comprising

a resin film, and a transition metal layer laminated with the resin film, wherein
the resin film includes a base resin layer, and a surface resin layer, and
at least the surface resin layer includes a nitrogen-containing resin.

(Technique 12)

The negative electrode current collector according to technique 11, wherein the nitrogen-containing resin is a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group.

<Examples>

The lithium secondary battery according to the present disclosure will be specifically described below with reference to Examples and Comparative Examples. The present disclosure is not limited to the following Examples.

<<Example 1>>

(1) Production of positive electrode

A lithium-containing transition metal oxide (NCA; positive electrode active material) containing Li, Ni, Co, and Al, acetylene black (AB; conductive material), and polyvinylidene fluoride (PVdF; binder) were mixed in a mass ratio of NCA:AB:PVdF = 95:2.5:2.5, to which an appropriate amount of N-methyl-2-pyrrolidone (NMP) was further added, and stirred, to prepare a positive electrode mixture slurry. Next, the obtained positive electrode mixture slurry was applied to both sides of an Al foil (thickness 15 $\mu$m) that functions as a positive electrode current collector, and then dried, followed by rolling of the applied films of the positive electrode mixture, using rollers. Lastly, the obtained stack of the positive electrode current collector and the positive electrode mixture layers was cut in a predetermined electrode size, to obtain a positive electrode with a positive electrode mixture layer (thickness 65 $\mu$m, 245 g/m$^2$) formed on each of both sides of the positive electrode current collector.

(2) Production of negative electrode

(2-1) Negative electrode current collector

Melamine resin as a nitrogen-containing resin was coated on both sides of a base resin layer (thickness 12 $\mu$m) made of polypropylene (PP), to form a surface resin layer (thickness 1 $\mu$m) on each side. Next, a vapor deposition film of copper was formed as a transition metal layer (thickness 1 $\mu$m) on the surface of each surface resin layer, to obtain a negative electrode current collector.

(2-2) Negative electrode

A negative electrode active material containing a silicon-containing material (composite particles each including a lithium silicate phase and nano-silicon particles dispersed therein at a content ratio of 55 mass%) and graphite particles in a mass ratio of 6:94, sodium carboxymethylcellulose (CMC-Na), and styrene-butadiene rubber (SBR) were mixed in a mass ratio of negative electrode active material : CMC-Na : SBR = 97.5 : 1 : 1.5, to which an appropriate amount of water was added, and stirred, to prepare a negative electrode mixture slurry. Next, the obtained negative electrode mixture slurry was applied to both sides of the negative electrode current collector, and then dried, followed by rolling of the applied films of the negative electrode mixture, using rollers. Lastly, the obtained stack of the negative electrode current collector and the negative electrode mixture layers was cut in a predetermined electrode size, to obtain a negative electrode having a negative electrode mixture layer (thickness 75 $\mu$m, 226 g/m$^2$) on each of both sides of the negative electrode current collector.

(3) Preparation of nonaqueous electrolyte

In a nonaqueous solvent, LiPF$_6$ was dissolved at a concentration of 1 mol/L, and LiBF$_2$(C$_2$O$_4$) was dissolved at a concentration of 0.1 mol/L, to prepare a liquid nonaqueous electrolyte. The nonaqueous solvent used here was a mixed solvent of 1,2-dimethoxyethane and 1,1,2,2-tetrafluoroethyl-2,2,2-trifluoroethyl ether.

(4) Fabrication of battery

An Al tab was attached to the positive electrode. A Ni tab was attached to the lithium metal layer of the negative electrode. In an inert gas atmosphere, the positive electrode and the negative electrode were wound, with a separator interposed between the positive electrode and the negative electrode, into a wound electrode group. The separator used here was a polyethylene microporous thin film (thickness 25 $\mu$m). The electrode group was housed in a bag-shaped outer body formed of a laminate sheet having an Al layer. The nonaqueous electrolyte was injected into the outer body which houses the electrode group, and then, the outer body was sealed, to complete a lithium secondary battery. In Table 1, a battery E1 is of Example 1.

<<Example 2>>

In an inert gas atmosphere, a lithium metal foil (thickness 25 $\mu$m) was pressed onto each of both sides of the negative electrode current collector prepared in the same manner as in Example 1, to produce a negative electrode having no negative electrode mixture layer. Using the negative electrode, a lithium secondary battery E2 was fabricated in the same manner as in Example 1.

<<Example 3>>

A negative electrode was produced in the same manner as in Example 2, except that the base resin layer made of polypropylene (PP) in the negative electrode current collector was replaced with a base resin layer (thickness 12 $\mu$m) made of polyethylene terephthalate (PET). Using the negative electrode, a lithium secondary battery E3 was fabricated in the same manner as in Example 1.

<<Example 4>>

A negative electrode was produced in the same manner as in Example 3, except that the surface resin layers of the negative electrode current collector made of melamine resin were each replaced with a surface resin layer (thickness 1 $\mu$m) made of polyurea resin. Using the negative electrode, a lithium secondary battery E4 was fabricated in the same manner as in Example 1.

<<Example 5>>

A negative electrode was produced in the same manner as in Example 3, except that the surface resin layers made of melamine resin in the negative electrode current collector were each replaced with a surface resin layer (thickness 1 $\mu$m) made of polyamide resin. Using the negative electrode, a lithium secondary battery E5 was fabricated in the same manner as in Example 1.

<<Example 6>>

A negative electrode was produced in the same manner as in Example 3, except that the surface resin layers made of melamine resin in the negative electrode current collector were each replaced with a surface resin layer (thickness 1 $\mu$m) made of aramid resin. Using the negative electrode, a lithium secondary battery E6 was fabricated in the same manner as in Example 1.

<<Example 7>>

A negative electrode was produced in the same manner as in Example 3, except that the surface resin layers made of melamine resin in the negative electrode current collector were each replaced with a surface resin layer (thickness 1 $\mu$m) made of polyimide resin. Using the negative electrode, a lithium secondary battery E7 was fabricated in the same manner as in Example 1.

<<Example 8>>

A negative electrode was produced in the same manner as in Example 3, except that the surface resin layers made of melamine resin in the negative electrode current collector were each replaced with a surface resin layer (thickness 1 $\mu$m) made of polyurethane resin. Using the negative electrode, a lithium secondary battery E8 was fabricated in the same manner as in Example 1.

<<Example 9>>

A negative electrode was produced in the same manner as in Example 8, except that silica having an average particle diameter of 1.5 $\mu$m was mixed into the surface resin layer (thickness 1 $\mu$m) made of polyurethane resin, in an amount of 5 parts by mass of per 100 parts by mass of the polyurethane resin. Using the negative electrode, a lithium secondary battery E9 was fabricated in the same manner as in Example 1.

<<Example 10>>

A negative electrode was produced in the same manner as in Example 3, except that the surface resin layers made of melamine resin in the negative electrode current collector were each replaced with a surface resin layer (thickness 1 $\mu$m) made of polyurethane resin including a residual isocyanate group. Using the negative electrode, a lithium secondary battery E10 was fabricated in the same manner as in Example 1.

<<Comparative Example 1>>

On each of both sides of the base resin layer (thickness 12 $\mu$m) made of polypropylene (PP), without forming a surface resin layer, a vapor deposition film of copper was directly formed as a transition metal layer (thickness 1 $\mu$m), to obtain a negative electrode current collector. A negative electrode mixture slurry was prepared in the same manner as in Example 1, except for using a negative electrode active material composed only of graphite particles, which was used to produce a negative electrode having a negative electrode mixture layer (thickness 75 $\mu$m, 226 g/m$^2$) on each of both sides of the negative electrode current collector. Using the negative electrode, a lithium secondary battery R1 was fabricated in the same manner as in Example 1.

<<Comparative Example 2>>

A negative electrode was produced in the same manner as in Comparative Example 1, except that the base resin layer made of polypropylene (PP) in the negative electrode current collector was replaced with a base resin layer (thickness 12 $\mu$m) made of polyethylene terephthalate (PET). Using the negative electrode, a lithium secondary battery R2 was fabricated in the same manner as in Example 1.

<<Comparative Example 3>>

On each of both sides of a base resin layer (thickness 12 $\mu$m) made of polypropylene (PP), without forming a surface resin layer, a vapor deposition film of copper was directly formed as a transition metal layer (thickness 1 $\mu$m), to obtain a negative electrode current collector. A lithium metal foil (thickness 25 $\mu$m) was pressed onto each of both sides of the negative electrode current collector, in an inert gas atmosphere, to produce a negative electrode having no negative electrode mixture layer. Using the negative electrode, a lithium secondary battery R3 was fabricated in the same manner as in Example 1.

<<Comparative Example 4>>

A negative electrode was produced in the same manner as in Comparative Example 3, except that the base resin layer made of polypropylene (PP) in the negative electrode current collector was replaced with a base resin layer (thickness 12 $\mu$m) made of polyethylene terephthalate (PET). Using the negative electrode, a lithium secondary battery R4 was fabricated in the same manner as in Example 1.

<<Comparative Example 5>>

A negative electrode was produced in the same manner as in Comparative Example 4, except that, before forming vapor deposition films of copper on both sides of the base resin layer, a nickel-chromium alloy (NiCr) layer having a thickness of 0.02 $\mu$m was formed on each of both sides of the base resin layer, and then, vapor deposition films of copper was formed thereon. Using the negative electrode, a lithium secondary battery R5 was fabricated in the same manner as in Example 1.

The configurations of the respective negative electrodes are summarized in Table 1. Note that the respective batteries were designed such that the initial design capacities were approximately the same.

[Table 1]

| | | negative electrode | | | | | evaluation | | | |
|---|---|---|---|---|---|---|---|---|---|---|
| | | Li metal layer / active material layer | transition metal layer | surface resin / metal layer | filler in surface resin layer | base resin layer | time T | capacity C0 (index) | Ed (index) | number of cycles (index) |
| | E1 | graphite + Si / 75$\mu$m | Cu / 1$\mu$m | melamine / 1$\mu$m | - | PP | > 0.8 yrs | 100 | 60 | 100 |
| | E2 | Li metal / 25$\mu$m | Cu / 1$\mu$m | melamine / 1$\mu$m | - | PP | > 0.8 yrs | 100 | 99 | 101 |
| | E3 | Li metal / 25$\mu$m | Cu / 1$\mu$m | melamine / 1$\mu$m | - | PET | > 1yr | 101 | 101 | 103 |
| | E4 | Li metal / 25$\mu$m | Cu / 1$\mu$m | urea / 1 $\mu$m | - | PET | > 1yr | 100 | 100 | 106 |
| | E5 | Li metal / 25$\mu$m | Cu / 1$\mu$m | amide / 1$\mu$m | - | PET | > 1yr | 99 | 99 | 106 |
| | E6 | Li metal / 25$\mu$m | Cu / 1$\mu$m | aramid / 1$\mu$m | - | PET | > 1yr | 99 | 99 | 107 |
| | E7 | Li metal / 25$\mu$m | Cu / 1$\mu$m | imide / 1$\mu$m | - | PET | > 1yr | 100 | 100 | 107 |
| | E8 | Li metal / 25$\mu$m | Cu / 1$\mu$m | urethane / 1$\mu$m | - | PET | > 1yr | 100 | 100 | 111 |
| | E9 | Li metal / 25$\mu$m | Cu / 1$\mu$m | urethane / 1$\mu$m | silica | PET | > 1yr | 100 | 100 | 113 |
| | E10 | Li metal / 25$\mu$m | Cu / 1$\mu$m | urethane + isocyanate / 1$\mu$m | - | PET | > 1yr | 99 | 99 | 114 |

(continued)

| | | negative electrode | | | | evaluation | | | |
|---|---|---|---|---|---|---|---|---|---|
| | Li metal layer / active material layer | transition metal layer | surface resin / metal layer | filler in surface resin layer | base resin layer | time T | capacity C0 (index) | Ed (index) | number of cycles (index) |
| R1 | graphite / 75μm | Cu / 1μm | - | - | PP | < 60 days | 100 | 62 | 70 |
| R2 | graphite / 75μm | Cu / 1μm | - | - | PET | < 60 days | 100 | 62 | 73 |
| R3 | Li metal / 25μm | Cu / 1μm | - | - | PP | < 15 days | 100 | 100 | 45 |
| R4 | Li metal / 25μm | Cu / 1μm | - | - | PET | < 30 days | 100 | 100 | 53 |
| R5 | Li metal / 25μm | Cu / 1μm | NiCr / 0.02μm | - | PET | < 60 days | 100 | 100 | 63 |

[Evaluation 1]

The time ("time T") passed until cracks occurred in the negative electrode current collector was measured by the following method. After providing lithium metal or an active material layer (graphite), the maximum height roughness Rz was measured initially and at regular intervals by the aforementioned method (JIS B 0601:2013). Embrittlement causes irregularities on the surface over time. The time T passed until the Rz became twice or more as large as the initial value was determined.

[Evaluation 2]

With respect to each of the obtained batteries, a charge-discharge cycle test was performed in a 25 °C environment. Charging and discharging were performed under the following conditions. The battery was allowed to rest for 20 minutes between charging and discharging.

(Charging)

A constant-current charging was performed at 10 mA until the voltage reached 4.1 V, and then a constant-voltage charging at 4.1 V was performed until the current reached 1 mA.

(Discharging)

A constant-current discharging was performed at 10 mA until the voltage reached 3 V.
The discharge capacity at the first cycle was determined as a capacity C0. The relative values (index) are show in Table 1, with the capacity C0 of Example 8 taken as 100.

[Evaluation 3]

The volume energy density of each of the batteries was calculated as a ratio of the capacity C0 to the volume of the electrode group, to determine the volume energy density (Ed). The relative values (index) are show in Table 1, with the energy density Ed of Example 8 taken as 100.

[Evaluation 4]

The charging and discharging of Evaluation 2 were repeated until the discharge capacity reached 80% of the capacity C0, and the number of cycles performed until then was determined. The relative values (index) are show in Table 1, with the capacity C0 of Example 1 taken as 100.
As shown in Table 1, when the surface resin layer was formed with a nitrogen-containing resin, the time T passed until cracks occurred in the negative electrode current collector was drastically prolonged, and the number of charge-discharge cycles was also remarkably increased. On the other hand, the reduction in energy density due to the inclusion of the surface resin layer was not observed.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Industrial Applicability]

The negative electrode current collector and secondary battery of the present disclosure can be used in electronic devices, such as mobile phones, smartphones, and tablet terminals, electric cars including hybrids and plug-in hybrids, and home storage batteries combined with solar cells.

[Reference Signs List]

| | |
|---|---|
| 10 | lithium secondary battery |
| 11 | positive electrode |
| 12 | negative electrode |
| 13 | separator |
| 14 | electrode group |
| 15 | case body |
| 16 | sealing body |
| 17, 18 | insulating plate |
| 19 | positive electrode lead |
| 20 | negative electrode lead |
| 21 | step portion |
| 22 | filter |
| 23 | lower valve body |
| 24 | insulating member |
| 25 | upper valve body |
| 26 | cap |
| 27 | gasket |
| 30 | positive electrode current collector |
| 31 | positive electrode mixture layer |
| 40 | resin film |
| 41 | lithium metal layer |
| 42 | base resin layer |
| 43 | surface resin layer |
| 44 | transition metal layer |

**Claims**

1. A secondary battery, comprising

 a positive electrode,
 a negative electrode,
 a separator disposed between the positive electrode and the negative electrode, and
 a nonaqueous electrolyte having lithium ion conductivity, wherein
 the negative electrode includes a negative electrode current collector,
 the negative electrode current collector includes a resin film, and a transition metal layer laminated with the resin film,
 the resin film includes a base resin layer, and a surface resin layer, and
 at least the surface resin layer contains a nitrogen-containing resin.

2. The secondary battery according to claim 1, wherein, on the negative electrode, lithium metal deposits during charging, and the lithium metal dissolves during discharging.

3. The secondary battery according to claim 1, wherein the nitrogen-containing resin includes a nitrogen-hydrogen bond.

4. The secondary battery according to claim 1, wherein the nitrogen-containing resin is a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group.

5. The secondary battery according to claim 1, wherein the nitrogen-containing resin is a polymer having at least one selected from the group consisting of an aliphatic isocyanate group, an aromatic isocyanate group, an allophanate group, and a biuret group.

6. The secondary battery according to claim 1, wherein the surface resin layer contains a filler.

7. The secondary battery according to claim 1, wherein a thickness of the surface resin layer is 5 $\mu$m or less.

8. The secondary battery according to claim 1, wherein a thickness of the base resin layer is 20 $\mu$m or less.

9. The secondary battery according to claim 1, wherein a thickness of the transition metal layer is 3 $\mu$m or less.

10. The secondary battery according to any one of claims 1 to 9, wherein a lithium metal layer is laminated on a surface of the transition metal layer.

11. A negative electrode current collector, comprising

a resin film, and a transition metal layer laminated with the resin film, wherein
the resin film includes a base resin layer, and a surface resin layer, and
at least the surface resin layer includes a nitrogen-containing resin.

12. The negative electrode current collector according to claim 11, wherein the nitrogen-containing resin is a polymer having at least one selected from the group consisting of a urea bond, a melamine structure, a triazine ring, an amino group, an amide bond, an aramid bond, an imide bond, a urethane bond, a carbodiimide bond, a uretdione structure, an isocyanurate ring, a nitrile group, and an amide group.

FIG. 1

FIG. 2

*FIG. 3*

## INTERNATIONAL SEARCH REPORT

| | International application No. |
|---|---|
| | **PCT/JP2023/033386** |

**A. CLASSIFICATION OF SUBJECT MATTER**

*H01M 4/66*(2006.01)i; *H01M 10/052*(2010.01)i
FI:   H01M4/66 A; H01M10/052

According to International Patent Classification (IPC) or to both national classification and IPC

**B. FIELDS SEARCHED**

Minimum documentation searched (classification system followed by classification symbols)

H01M4/66; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-100443 A (MITSUBISHI CHEMICAL CORP.) 07 April 2000 (2000-04-07) claims, paragraphs [0006]-[0020], examples | 1-4, 6-9, 11-12 |
| A | | 5, 10 |
| A | WO 2014/034758 A1 (KANEKA CORP.) 06 March 2014 (2014-03-06) entire text | 1-12 |
| A | JP 2014-229387 A (NITTO DENKO CORP.) 08 December 2014 (2014-12-08) entire text | 1-12 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 November 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

EP 4 597 639 A1

## INTERNATIONAL SEARCH REPORT
**Information on patent family members**

International application No.

**PCT/JP2023/033386**

| Patent document cited in search report | | | Publication date (day/month/year) | Patent family member(s) | | | Publication date (day/month/year) |
|---|---|---|---|---|---|---|---|
| JP | 2000-100443 | A | 07 April 2000 | (Family: none) | | | |
| WO | 2014/034758 | A1 | 06 March 2014 | US | 2015/0318555 | A1 | |
| | | | | EP | 2892097 | A1 | |
| | | | | CN | 104604003 | A | |
| | | | | KR | 10-2015-0048707 | A | |
| JP | 2014-229387 | A | 08 December 2014 | WO | 2014/188896 | A1 | |
| | | | | TW | 201445801 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021502671 A